# EUROPEAN PATENT APPLICATION

(11) **EP 3 534 363 A1**
(43) Date of publication of application: **04.09.2019**
(21) Application number: 17863826.8
(22) Date of filing: 13.10.2017
(51) Int. Cl.: G10L 15/22, G06F 3/16

(54) **INFORMATION PROCESSING DEVICE AND INFORMATION PROCESSING METHOD**

(30) Priority: 27.10.2016 JP 2016210283
(71) Applicant: Sony Corporation, Tokyo 108-0075 (JP)
(72) Inventor: KAWANO Shinichi, Tokyo 108-0075 (JP); TAKI Yuhei, Tokyo 108-0075 (JP); NAKAGAWA Yusuke, Tokyo 108-0075 (JP)
(74) Representative: MFG Patentanwälte Meyer-Wildhagen Meggle-Freund Gerhard PartG mbB
(86) International application number: PCT/JP2017/037117
(87) International publication number: WO 2018/079294

(57) **Abstract**

This technology relates to an information processing apparatus and an information processing method to improve the convenience in inputting information.

The information processing apparatus includes a feedback information generation section that generates feedback information including at least either an input level or modified information, the input level indicating the level of input information and being set on a basis of a first speech that meets a predetermined input condition, the modified information being obtained by modifying the input information on a basis of the first speech. This technology may be applied, for example, to servers, clients, and application programs for performing speech recognition and for executing processes based on the result of speech recognition.

## Description

### [Technical Field]

The present technology relates to an information processing apparatus and an information processing method. More particularly, the technology relates to an information processing apparatus and an information processing method for improving the convenience in inputting information.

### [Background Art]

Heretofore, a number of techniques regarding natural language processing have been proposed. For example, PTL 1 cited below discloses techniques for creating sentences based on the phrases selected by a user from multiple phrases.

Also, a variety of techniques regarding speech recognition have been proposed. Through speech recognition, the speech input by the user is converted to a character string.

### [Citation List]

### [Patent Literature]

[PTL 1]
Japanese Patent Laid-Open No. 2012-53634

### [Summary]

### [Technical Problem]

However, with the existing speech recognition techniques, it is difficult to make the differences in expression such as speech intonation, speech speed, and sound length reflected in the character string after conversion appropriately. For example, in speech recognition, it is difficult to obtain a sentence that expresses a user's emotion using a larger number of vowels than normal, such as "What a cooooooooool game." Therefore, in this case, after obtaining the character string "What a cool game" through speech recognition, for example, the user needs to manually input the additional "o"s. Alternatively, the user is required to manually input the entire character string "What a cooooooooool game."

In view of the above circumstances, the present technology aims to improve the convenience in inputting information.

### [Solution to Problem]

According to a first aspect of the present technology, there is provided an information processing apparatus including a feedback information generation section configured to generate feedback information including at least either an input level or modified information, the input level indicating a level of input information and being set on a basis of a first speech that meets a predetermined input condition, the modified information being obtained by modifying the input information on the basis of the first speech.

The information processing apparatus may further include a speech recognition section configured to acquire the input information by converting a second speech into a character string.

The input condition may include requiring the first speech to be input at a predetermined timing following input of the second speech.

The input condition may include requiring a difference in sound volume between the first speech and the second speech to meet a predetermined condition.

The input condition may include requiring a feature quantity of the first speech to meet a predetermined condition.

The input condition may include requiring a predetermined phoneme in the first speech to be continued for at least a predetermined length.

The feedback information generation section may set the input level based on a feature quantity of the first speech.

The feedback information generation section may set the input level based on a continuation time of the first speech.

The feedback information generation section may set the input level based on a sound volume of the first speech.

The feedback information generation section may generate the modified information by adding a character string to the input information.

The feedback information generation section may generate the modified information by repeating a predetermined character or a predetermined symbol in the input information.

The feedback information generation section generates the modified information by repeating a predetermined character or a predetermined symbol in a word of a predetermined part of speech in the input information.

The feedback information generation section may adjust a quantity of the character string to be added to the input information on a basis of a feature quantity of the first speech.

The feedback information may include the input information and the input level.

According to the first aspect of the present technology, there is provided an information processing method including the step of generating feedback information including at least either an input level or modified information, the input level indicating a level of input information and being set on a basis of a speech that meets a predetermined input condition, the modified information being obtained by modifying the input information on the basis of the speech.

According to a second aspect of the present technology, there is provided an information processing apparatus including an execution section configured to execute a process relevant to input information on a basis of an input level indicative of a level of the input information, the input level being set on a basis of a first speech that meets a predetermined input condition.

The execution section may modify the input information at a level corresponding to the input level.

The input information may be a command input using a second speech, and the execution section may execute a process relevant to the command at a level corresponding to the input level.

The execution section may respond to the input information at a level corresponding to the input level.

According to the second aspect of the present technology, there is provided an information processing method including the step of executing a process relevant to input information on a basis of an input level indicative of a level of the input information, the input level being set on a basis of a speech that meets a predetermined input condition.

According to the first aspect of the present technology, there is generated feedback information including at least either an input level or modified information, the input level indicating the level of input information and being set on the basis of a speech that meets a predetermined input condition, the modified information being obtained by modifying the input information on the basis of the speech.

According to the second aspect of the present technology, a process relevant to input information is executed on the basis of an input level indicative of the level of the input information, the input level being set on the basis of a speech that meets a predetermined input condition.

### [Advantageous Effect of Invention]

According to the first or the second aspect of the present technology, the convenience in inputting information is improved.

Incidentally, the advantageous effects recited herein are not necessarily limited thereto and may also be any of those recited in the present disclosure.

### [Brief Description of Drawings]

FIG. 1 is a block diagram depicting an embodiment of an information processing system to which the present technology is applied.
FIG. 2 is a schematic diagram outlining a process performed by the information processing system.
FIG. 3 is a flowchart explaining a process performed by a client.
FIG. 4 is a schematic diagram depicting typical images displayed during the process performed by the client.
FIG. 5 is another schematic diagram depicting typical images displayed during the process performed by the client.
FIG. 6 is another schematic diagram depicting typical images displayed during the process performed by the client.
FIG. 7 is a schematic diagram depicting a typical method of modifying input information.
FIG. 8 is a flowchart explaining a process performed by a server.
FIG. 9 is another flowchart explaining the process performed by the server.
FIG. 10 is a tabular diagram depicting a typical method of setting an input level.
FIG. 11 is a schematic diagram depicting a typical method of modifying input information.
FIG. 12 is a schematic diagram explaining an example in which the present technology is applied to an interactive agent.
FIG. 13 is a schematic diagram explaining another example in which the present technology is applied to the interactive agent.
FIG. 14 is a schematic diagram explaining an example in which the present technology is applied to operations involving voice commands.
FIG. 15 is a schematic diagram explaining another example in which the present technology is applied to operations involving voice commands.
FIG. 16 is a block diagram depicting a typical configuration of a computer.

### [Description of Embodiments]

The preferred embodiments for practicing the present technology (referred to as the embodiments) are described below in detail with reference to the accompanying drawings. The description is given under the following headings:
1. Embodiments
2. Variations
3. Application examples

### 1. Embodiments

### 1-1. Typical configuration of the information processing system

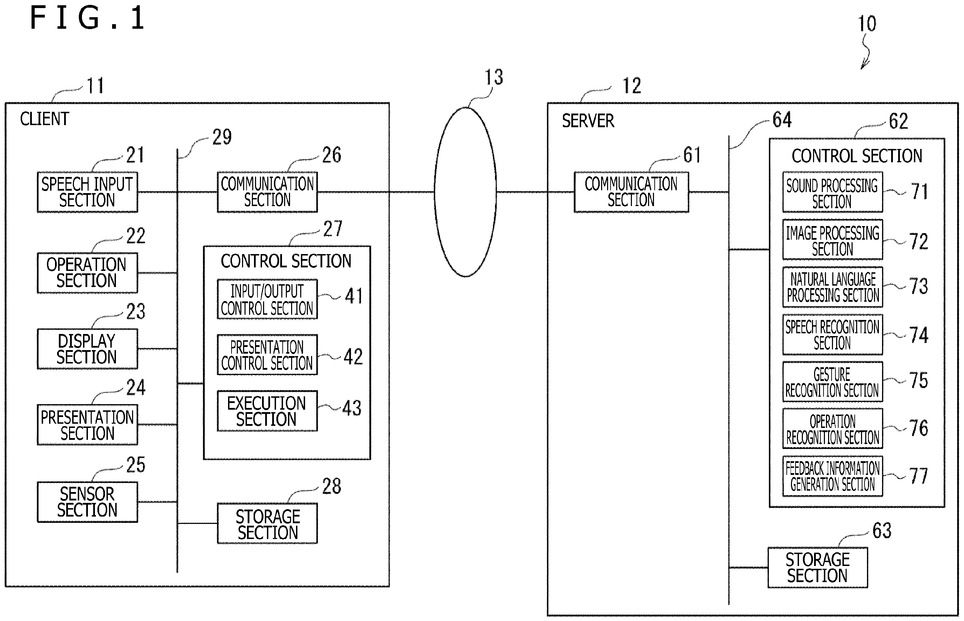

First, a typical configuration of an information processing system 10 to which the present technology is applied is described below with reference to FIG. 1.

The information processing system 10 is a system that recognizes speeches input by a user and performs processes relevant to the result of the recognition. The information processing system 10 includes a client 11, a server 12, and a network 13. The client 11 and the server 12 are connected with each other via the network 13.

Although only one client 11 is depicted in the drawing, multiple clients 11 are connected in practice with the network 13, so that multiple users may utilize the information processing system 10 via the clients 11.

The client 11 transmits to the server 12 speech data representing speeches input by the user, receives from the server 12 feedback information regarding the transmitted speech data, and performs processes relevant to the feedback information.

For example, the client 11 includes a mobile information terminal such as a smartphone, a tablet, a mobile phone, or a laptop personal computer; a wearable device, a desktop personal computer, a game machine, a video reproduction apparatus, or a music reproduction apparatus. The wearable device may be of various types including, for example, a spectacle type, a wristwatch type, a bracelet type, a necklace type, a neckband type, an earphone type, a headset type, and a head-mounted type.

The client 11 includes a speech input section 21, an operation section 22, a display section 23, a presentation section 24, a communication section 26, a control section 27, and a storage section 28. The control section 27 includes an input/output control section 41, a presentation control section 42, and an execution section 43. The speech input section 21, operation section 22, display section 23, presentation section 24, communication section 26, control section 27, and storage section 28 are interconnected via a bus 29.

The speech input section 21 includes a microphone, for example. The number of microphones may be determined as desired. The speech input section 21 collects nearby speeches, supplies the control section 27 with speech data indicative of the collected speeches, and stores the speech data into the storage section 28.

The operation section 22 includes various operating members for use in operating the client 11. For example, the operation section 22 includes a controller, a remote controller, a touch panel, and hardware buttons. The operation section 22 supplies the control section 27 with operation data indicative of operational details regarding the control section 22.

The display section 23 includes a display, for example. Under control of the presentation control section 42, the display section 23 displays various images, a GUI (Graphical User Interface), and screens of diverse applications and services.

The presentation section 24 includes speakers, a vibration device, and other collaborative devices, for example. Under control of the presentation control section 42, the presentation section 24 presents diverse information upon execution of processes relevant to the feedback information.

A sensor section 25 includes various sensors including a camera, a distance sensor, a GPS (Global Positioning System) receiver, an acceleration sensor, and a gyro sensor. The sensor section 25 supplies the control section 27 with sensor data indicative of the results of detection by the sensors and stores the sensor data into the storage section 28.

The communication section 26 includes various communication devices. The method of communication by the communication section 26 is not limited to anything specific; communication may be carried out in either wireless or wired fashion. The communication section 26 may support multiple communication methods. The communication section 26 communicates with the server 12 via the network 13 to transmit and receive diverse data to and from the server 12. The communication section 26 supplies the control section 27 with the data received from the server 12 and stores the received data into the storage section 28.

The control section 27 includes various processors, for example.

The input/output control section 41 controls the input and output of diverse data. For example, the input/output control section 41 extracts the data required in the process performed by the server 12 out of the speech data from the speech input section 21, out of the operation data from the operation section 22, and out of the sensor data from the sensor section 25. The input/output control section 41 transmits the extracted data to the server 12 via the communication section 26 and network 13. Furthermore, the input/output control section 41 receives, for example, the feedback information from the server 12 via the communication section 26 and network 13.

The presentation control section 42 controls the presentation of diverse information performed by the display section 23 and presentation section 24.

The execution section 43 executes various processes by carrying out diverse application programs (called the APPs hereunder).

The storage section 28 stores the programs, data, and other resources necessary for the processes to be performed by the client 11.

The server 12 performs speech recognition on the speech data received from the client 11, generates feedback information based on the result of the recognition, and transmits the feedback information to the client 11 via the network 13. The server 12 includes a communication section 61, a control section 62, and a storage section 63. The control section 62 includes a sound processing section 71, an image processing section 72, a natural language processing section 73, a speech recognition section 74, a gesture recognition section 75, an operation recognition section 76, and a feedback information generation section 77. The communication section 61, control section 62, and storage section 63 are interconnected via a bus 64.

The communication section 61 includes various communication devices. The method of communication by the communication section 61 is not limited to anything specific; communication may be carried out in either wireless or wired fashion. The communication section 61 may support multiple communication methods. The communication section 61 communicates with the client 11 via the network 13 to transmit and receive diverse data to and from the client 11. The communication section 61 supplies the control section 62 with the data received from the client 11 and stores the received data into the storage section 63.

The control section 62 includes various processors, for example.

The sound processing section 71 extracts various feature quantities from speech data. The feature quantities extracted by the sound processing section 71 are not limited to, but include, phonemes, sound volumes, intonations, lengths, and speeds, for example.

The image processing section 72 extracts various feature quantities out of image data. The feature quantities extracted by the image processing section 72 are not limited to, but include, the quantities of features suitable for recognizing human gestures, for example.

The natural language processing section 73 performs natural language processing such as morphological analysis, parsing, and modality analysis.

The speech recognition section 74 performs speech recognition processing to convert input speeches into character strings.

On the basis of the feature quantities extracted by the image processing section 72, the gesture recognition section 75 recognizes the gesture of a person that appears in the image data.

The operation recognition section 76 recognizes operations performed by the client 11 on the basis of operation data acquired from the client 11.

The feedback information generation section 77 generates feedback information based on the results of the processes performed by the sound processing section 71, image processing section 72, natural language processing section 73, speech recognition section 74, gesture recognition section 75, and operation recognition section 76. The feedback information includes at least input information obtained by performing speech recognition on the speech data from the client 11, an input level indicative of the level of the input information, or modified information acquired by modifying the input information in accordance with the input level. Also, the feedback information includes the result of natural language processing carried out on the input information, for example.

The storage section 63 stores the programs, data, and other resources necessary for the processes to be performed by the server 12.

In the description that follows, in cases where the client 11 (communication section 26) and the server 12 (communication section 61) communicate with each other via the network 13, the wording "via the network 13" will be omitted. In like manner, where the components of the client 11 exchange data therebetween via the bus 29, the wording "via the bus 29" will be omitted. Likewise, where the components of the server 12 exchange data therebetween via the bus 64, the wording "via the bus 64" will be omitted.

### 1-2. Outline of the processing performed by the information processing system 10

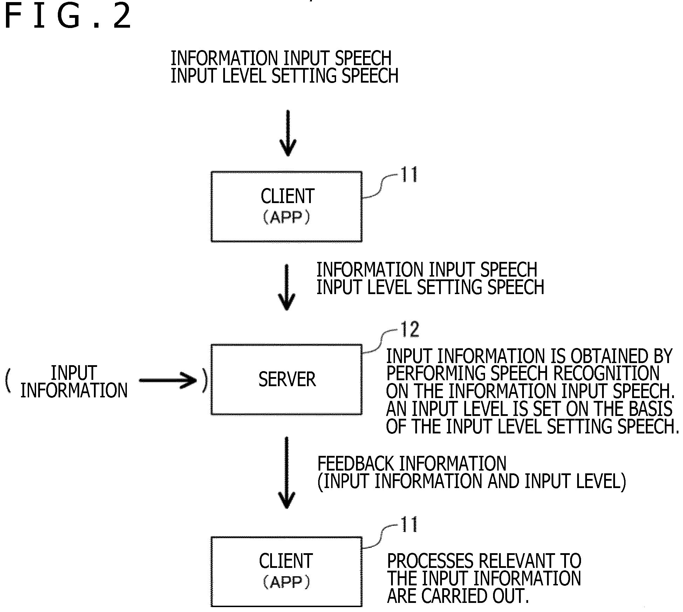

An outline of the processing performed by the information processing system 10 is explained below with reference to FIG. 2.

First, the user inputs to the client 11 an information input speech for inputting input information and an input level setting speech for setting an input level. At this point, the input level setting speech is input in a manner meeting a predetermined input condition. The client 11 (the APP executed by the client 11) transmits to the server 12 the speech data indicative of the information input speech and of the input level setting speech.

The server 12 performs speech recognition on the information input speech to convert the information input speech into a character string, thereby acquiring the input information. Also, the server 12 sets the input level based on the input level setting speech. The input level represents various levels of the input information. The input level is used, for example, as a feedback level at the time of performing processes using the input information. For example, the input level represents the level of the emotion expressed by the input information, the level of the process performed on the basis of the input information, or the quality and the quantities of the input information (such as size, length, thickness, weight, and quality). The server 12 generates feedback information including the input information and the input level and transmits the generated feedback information to the client 11.

The client 11 (or the APP executed by the client 11) performs processes relevant to the feedback information. For example, the client 11 performs the process of modifying the input information (text information) obtained through speech recognition at a level corresponding to the input level. As another example, the client 11 performs processes relevant to a command recognized through speech recognition at a level corresponding to the input level. As a further example, the client 11 performs the process of responding to the input information acquired through speech recognition at a level corresponding to the input level.

Alternatively, the input information may be supplied not from the client 11 but directly to the server 12 or from other servers to the server 12.

### 1-3. Specific examples of the processing performed by the information processing system 10

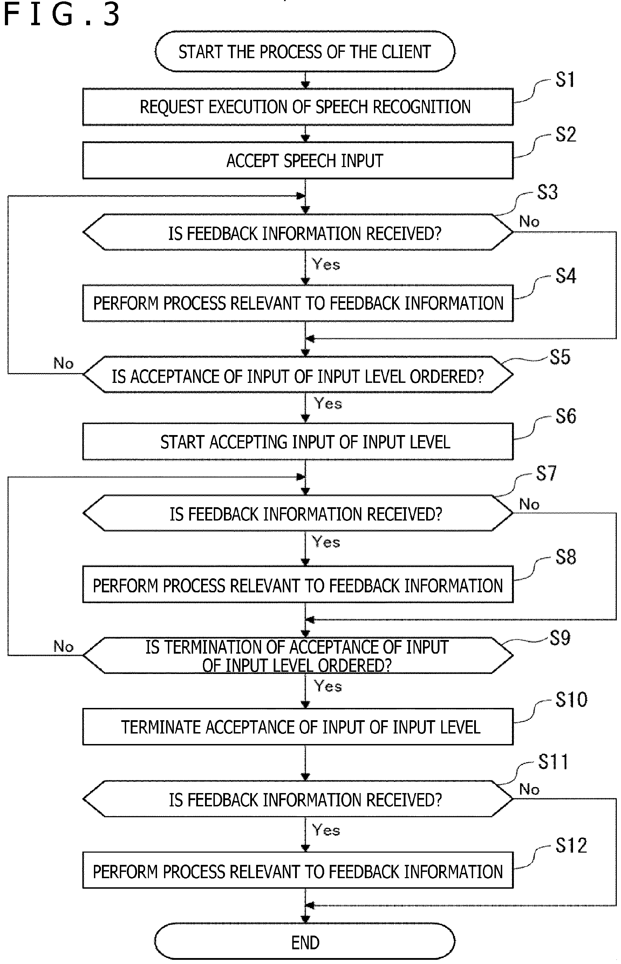

Specific examples of the processing performed by the information processing system 10 are explained below with reference to FIGS. 3 to 11.

### <Process performed by the client 11>

First, the process performed by the client 11 is explained with reference to the flowchart of FIG. 3. This process is started when, for example, the user inputs an order to execute speech recognition via the operation section 22.

Explained below is a specific example in which, after the user inputs a sentence "What a cool game" by speech as the input information followed by input of an input level setting speech, the information processing system 10 modifies the input sentence.

In step S1, the client 11 requests execution of speech recognition. Specifically, the execution section 43 generates a speech recognition start instruction as a command to order the start of speech recognition. The input/output control section 41 transmits the speech recognition start instruction to the server 12 via the communication section 26. At this point, the input/output control section 41 attaches information such as the type of the client 11 or the type of the APP that uses the result of speech recognition at the client 11 to the speech recognition start instruction as needed.

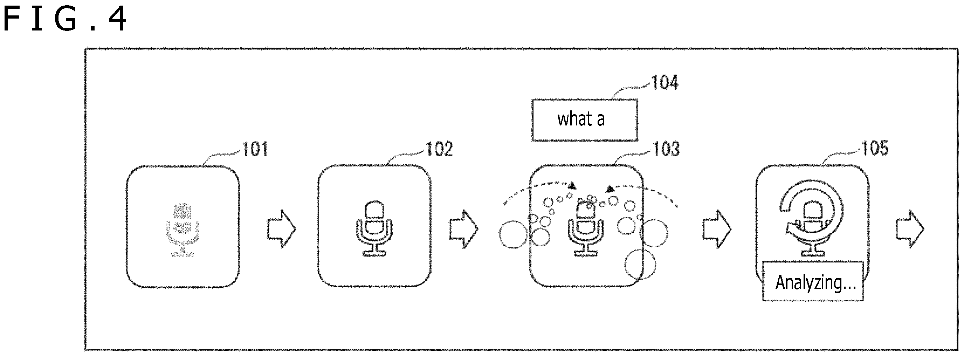

In step S2, the client 11 accepts speech input. Specifically, for example, the presentation control section 42 controls the display section 23 or the presentation section 24 to prompt the user to input a speech. For example, an image 101 currently displayed on the display section 23 is changed to an image 102 as depicted in FIG. 4, indicating to the user that speech input is being accepted.

In response, the user inputs by speech the sentence desired to be recognized. The input/output control section 41 starts the process of acquiring from the speech input section 21 the speech data indicative of the speech input by the user (information input speech) and transmitting the acquired speech data to the server 12 via the communication section 26. Also, the input/output control section 41 starts the process of transmitting the operation data supplied from the operation section 22 and the sensor data fed from the sensor section 25 to the server 12 via the communication section 26 as needed.

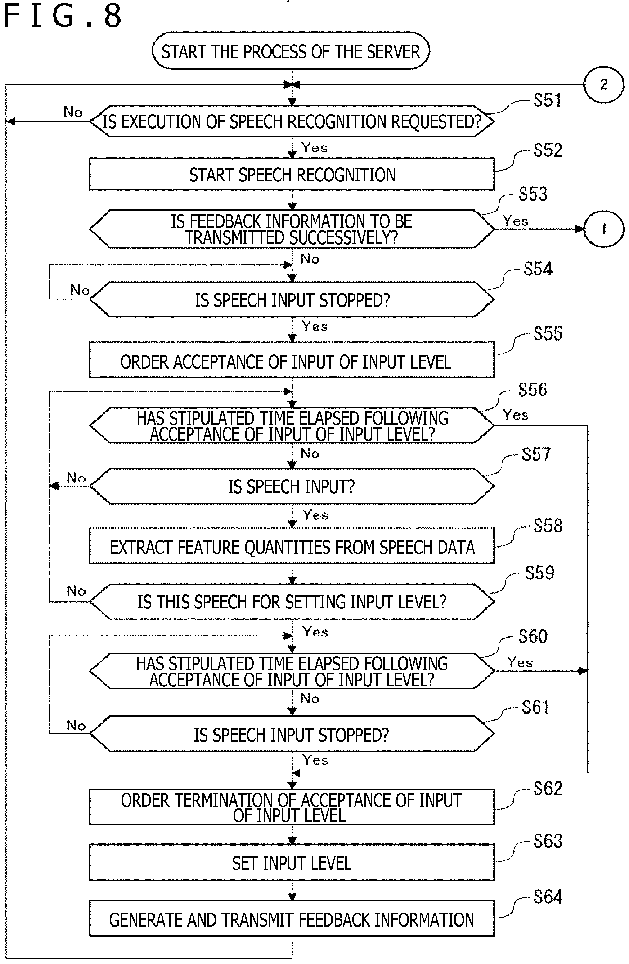

In step S52 in FIG. 8, to be discussed later, the server 12 starts speech recognition on the speech data from the client 11. In step S64 or S65, the server 12 transmits feedback information. The feedback information includes, for example, the input information as text information acquired as the result of speech recognition, and the result of natural language processing carried out on the input information. Incidentally, in the case where the feedback information is transmitted halfway through speech recognition, for example, text information indicative of an ongoing progress during speech recognition (i.e., part of the input information) is included in the feedback information.

In step S3, the input/output control section 41 discriminates whether or not feedback information is received. In the case where the feedback information is received from the server 12 via the communication section 26, the input/output control section 41 discriminates that the feedback information is received. Control is then transferred to step S4.

In step S4, the client 11 performs processes relevant to the feedback information.

For example, in the case where the feedback information includes the text information indicative of the ongoing progress during speech recognition, the presentation control section 42 causes the display section 23 to display an image 103 indicative of the ongoing speech input and an image 104 indicating that speech recognition is underway, the images being depicted in the third position from left in FIG. 4.

Also, while the feedback information (result of speech recognition) from the server 12 is being awaited, the presentation control section 42 causes the display section 23 to display an image 105 indicating that analysis is underway, the image 105 being depicted in the rightmost position in FIG. 4.

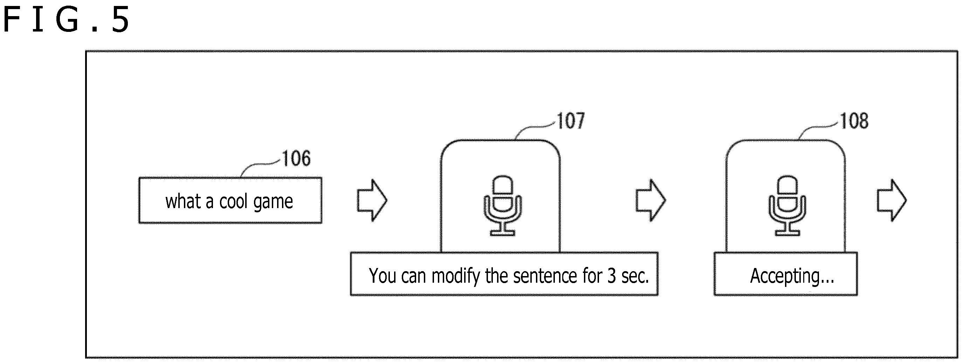

Further, in the case where the feedback information includes the input information indicative of the final result of speech recognition, for example, the presentation control section 42 causes the display section 23 to display an image 106 indicating the final result of speech recognition, the image 106 being depicted in the leftmost position in FIG. 5.

Control is then transferred to step S5.

On the other hand, in the case where it is discriminated in step S3 that the feedback information is not received, the processing of step S4 is skipped and control is transferred to step S5.

In step S5, the input/output control section 41 discriminates whether or not acceptance of the input of an input level is ordered. If it is discriminated that acceptance of the input of an input level is not ordered, control is returned to step S3.

Thereafter, the processing ranging from step S3 to step S5 is repeated until it is discriminated in step S5 that acceptance of the input of an input level is ordered.

On the other hand, in step S5, in the case where an input level input start instruction, to be discussed later, is received from the server 12 via the communication section 26, the input/output control section 41 discriminates that acceptance of the input of the input level is ordered. Control is then transferred to step S6.

In step S6, the client 11 starts accepting the input of the input level. For example, the presentation control section 42 controls the display section 23 or the presentation section 24 to prompt the user to input the input level. For example, as depicted in the center position in FIG. 5, the display section 23 is caused to display an image 107 including a message saying that modification of the sentence is accepted for three seconds. Then as depicted in the rightmost position in FIG. 5, the display section 23 is caused to display an image 108 including a message saying that the input of an input level for modifying the sentence is being accepted.

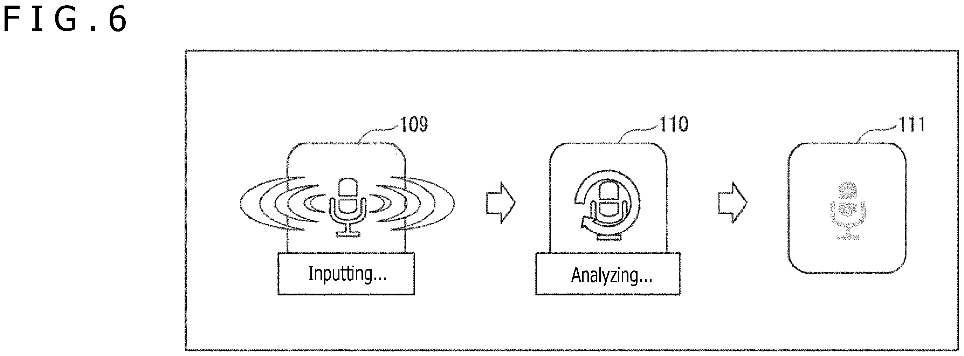

In response, the user inputs an input level setting speech for setting the input level. At this point, for example, the presentation control section 42 causes the display section 23 to display an image 109 indicating that the input level setting speech is being input, the image 109 being depicted in the leftmost position in FIG. 6.

As another example, a speech whose feature quantities meet a predetermined condition is input as the input level setting speech. Specifically, a speech in which a vowel as a phoneme is continued longer than a predetermined length is input as the input level setting speech. In this case, the sentence input by the input level setting speech may be the same as or different from the information input speech. For example, in the former case, at least part of the vowels in the sentence is prolonged, such as "What a cooooooooool game." In the latter case, some of the vowels in the sentence are prolonged, such as "Ooo Ooo Ooo Ooo." Also in the latter case, the sentence may or may not have a meaning; the sentence may simply be a sequence of sounds.

As a further example, a speech in which a predetermined phoneme is continued longer than a predetermined length is input as the input level setting speech. For example, a speech in which a phoneme is continued such as "nnnn" or "ohhhhhhhhhhhhhhhhh" is input.

As an even further example, a speech of which the sound volume is relatively higher or lower than that of the most recently input information input speech is input as the input level setting speech. That is, a speech of which the difference in sound volume from the information input speech meets a predetermined condition is input as the input level setting speech. In this case, the sentence input by the input level setting speech may be the same as or different from the information input speech. In the latter case, either a meaningful sentence such as "really" or a meaningless sentence may be input. Also, a threshold value may be set for the difference in sound volume from the information input speech. Then a speech of which the difference in sound volume from the information input speech is higher than the threshold value may be recognized as the input level setting speech. Furthermore, a threshold value may also be set for the speech continuation time. Then a speech of which the continuation time is longer than the threshold value may be recognized as the input level setting speech.

The input/output control section 41 starts the process of acquiring from the speech input section 21 the speech data indicative of the input level setting speech input by the user and transmitting the acquired speech data to the server 12 via the communication section 26.

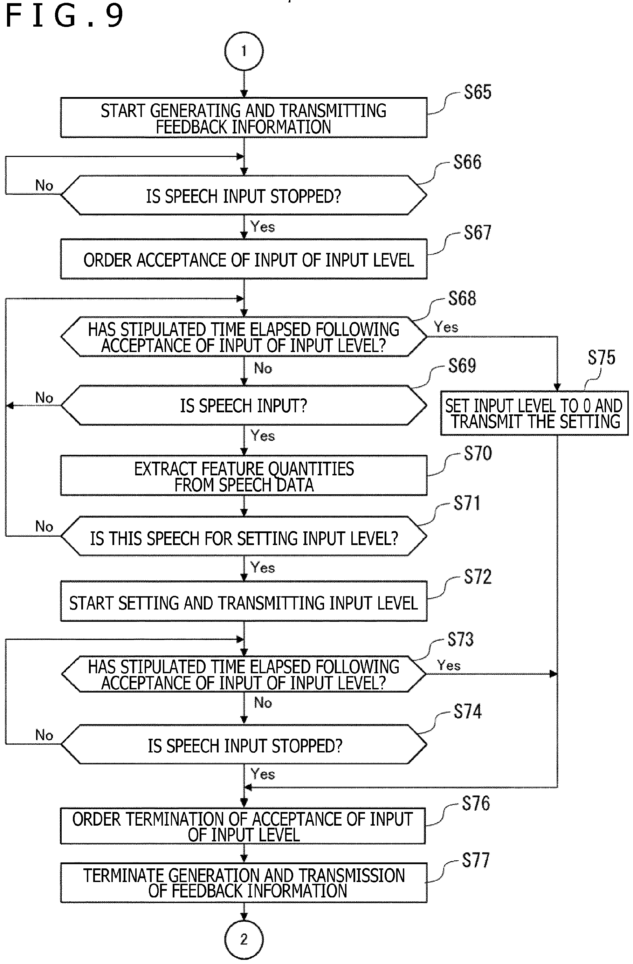

In step S63 in FIG. 8, in step S72 in FIG. 9, or in step S75 in FIG. 9, to be discussed later, the server 12 sets the input level. Also in step S63 in FIG. 8, in step S72 in FIG. 9, or in step S75 in FIG. 9, to be described later, the server 12 transmits the feedback information including the set input level to the client 11.

In step S7, as in the processing of step S3, it is discriminated whether or not the feedback information is received. If it is discriminated that the feedback information is received, control is transferred to step S8.

In step S8, the client 11 performs processes relevant to the feedback information. For example, on the basis of the input level, the execution section 43 modifies the input information (text information) obtained through speech recognition by adding a character string thereto. The character string here is a continuation of at least one character or symbol, for example. The character string may alternatively be constituted by a single character.

For example, on the basis of the input level, the execution section 43 modifies the input information by repeating all or part of the vowels therein. At this point, the higher the input level, the larger the number of times any vowel is repeated; the lower the input level, the smaller the number of times any vowel is repeated.

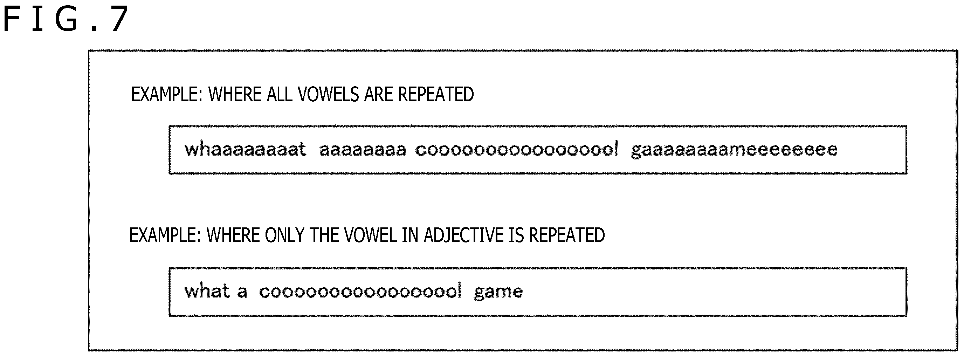

An example in the upper part of FIG. 7 is one in which all vowels in the input information ("What a cool game") are repeated.

On the other hand, an example in the lower part of FIG. 7 is one in which only the vowel of an adjective ("cool") in the input information ("What a cool game") is repeated. The part of speech of which the vowel is repeated is not limited to the adjective. Any other part of speech or two or more parts of speech may be selected. Also, only some of the vowels in the selected part of speech may be repeated. In this case, the vowel to be repeated is randomly selected, for example. In the case where any word of the applicable part of speech is not found in the input information, the input information may be left unmodified.

As another example, the consonants, not vowels, may be repeated. As a further example, the user may select from the input information a word in which a vowel or a consonant is to be repeated.

Alternatively, the execution section 43 adds a character string to the input information in accordance with the sequence of the parts of speech therein. For example, the execution section 43 modifies the input information in such a manner that a sequence of a noun and a postpositional particle in the input information is immediately followed by the same postpositional particle.

As another example, on the basis of the modality information regarding the input information, the execution section 43 selects symbols to be added to the input information and adds the selected symbols thereto. At this point, the amount of the added symbols is adjusted in accordance with the input level. For example, the higher the input level, the larger the number of times the symbols are repeated; the lower the input level, the smaller the number of times the symbols are repeated.

As a further example, the execution section 43 modifies the input information by randomly selecting at least one character therefrom and by repeating the selected characters. At this point, the amount of the added symbols is adjusted in accordance with the input level. For example, the higher the input level, the larger the number of times the selected characters are repeated; the lower the input level, the smaller the number of times the selected characters are repeated.

Also at this point, while modification of the input information is underway, the presentation control section 42 causes the display section 23 to display an image 110 indicating that the input information is being modified (analysis in progress) as depicted in the center position in FIG. 6, for example.

Thereafter, control is transferred to step S9.

On the other hand, in the case where it is discriminated in step S7 that the feedback information is not received, the processing of step S8 is skipped and control is transferred to step S9.

In step S9, the input/output control section 41 discriminates whether or not termination of acceptance of the input of the input level is ordered. In the case where it is determined that termination of acceptance of the input of an input level is not ordered, control is returned to step S7.

Thereafter, the processing ranging from step S7 to step S9 is repeated until it is discriminated in step S9 that termination of acceptance of the input of the input level is ordered. In this manner, during input of the input level, in accordance with the input level currently being input, the process relevant to the feedback information is carried out in parallel. For example, in accordance with the input level currently being input, the process of modifying and presenting the input information in real time is performed.

It may happen that during input of the input level, the process relevant to the feedback information is not carried out and that the process relevant to the feedback information is performed upon completion of input of the input level. In that case, the processing of step S8 is skipped.

On the other hand, when an input level input termination instruction, to be discussed below, is received from the server 12 via the communication section 26 in step S9, the input/output control section 41 discriminates that termination of acceptance of the input of the input level is ordered. Control is then transferred to step S10.

In step S10, the client 11 terminates acceptance of the input of the input level. For example, the presentation control section 42 controls the display section 23 or the presentation section 24 to notify the user that the input of the input level is terminated. For example, the display section 23 is caused to display an image 111 indicating that the input of speeches is not accepted, as depicted in an example of the rightmost position in FIG. 6. Also, the input/output control section 41 stops transmission of the speech data, operation data, and sensor data to the server 12.

In step S11, as in the processing of step S3, it is discriminated whether or not the feedback information is received. In the case where it is discriminated that the feedback information is received, control is transferred to step S12.

In step S12, as in the processing of step S8, processes relevant to the feedback information are performed. At this point, for example, the presentation control section 42 controls the display section 23 or the presentation section 24 to present the modified information (e.g., the modified sentence in FIG. 7) obtained by modifying the input information. Also, for example, the input/output control section 41 transmits the modified information to a downstream apparatus or to other servers via the network 13.

Thereafter, the process performed by the client 11 is terminated.

On the other hand, in the case where it is discriminated in step S11 that the feedback information is not received, the processing of step S12 is skipped and the process carried out by the client 11 is terminated.

Explained below with reference to the flowcharts in FIGS. 8 and 9 is the process performed by the server 12 in conjunction with the process carried out by the client 11 as depicted in FIG. 3.

In step S51, the speech recognition section 74 discriminates whether or not execution of speech recognition is requested. The speech recognition section 74 repeats the processing of step S51 in a suitably timed manner until it is discriminated that execution of speech recognition is requested. In the case where the speech recognition start instruction transmitted from the client 11 in step S1 in FIG. 3 is received via the communication section 61, the speech recognition section 74 discriminates that execution of speech recognition is requested. Control is then transferred to step S52.

In step S52, the speech recognition section 74 starts speech recognition. Specifically, the speech recognition section 74 receives via the communication section 61 the speech data of which the transmission is started by the client 11 in step S2 in FIG. 3. The speech recognition section 74 then starts speech recognition processing on the received speech data. Also, the natural language processing section 73 starts natural language processing on the input information (text information) obtained through speech recognition.

In step S53, the feedback information generation section 77 discriminates whether or not the feedback information is to be transmitted successively. For example, the feedback information generation section 77 discriminates whether or not a process in which the feedback information is successively needed is being carried out by the client 11 on the basis of the type of the client 11 or in accordance with the type of the APP that uses the result of speech recognition at the client 11. For example, in the case where the result of speech recognition is required to be presented successively to the user, it is discriminated that the client 11 is carrying out the process in which the feedback information is successively required. In the case where the client 11 is not performing the process in which the feedback information is successively needed, it is discriminated that the feedback information is not to be transmitted successively. Control is then transferred to step S54.

In step S54, the server 12 discriminates whether or not speech input is stopped. For example, the speech recognition section 74 discriminates whether or not speech input is stopped on the basis of the result of VAD (Voice Activity Detection) regarding the speech data from the client 11. Alternatively, on the basis of the operation data from the client 11, the operation recognition section 76 discriminates whether or not speech input is stopped by detecting whether or not an operation to stop speech input is carried out.

The server 12 repeats the processing of step S54 in a suitably timed manner until it is discriminated that speech input is stopped. When it is discriminated that speech input is stopped, control is transferred to step S55.

In step S55, the feedback information generation section 77 orders acceptance of the input of an input level. Specifically, the feedback information generation section 77 generates an input level input start instruction acting as a command to order acceptance of the input of an input level. The feedback information generation section 77 transmits the input level input start instruction to the client 11 via the communication section 61.

In step S56, the feedback information generation section 77 discriminates whether or not a stipulated time (e.g., three seconds) has elapsed following acceptance of the input of the input level. In the case where it is discriminated that the stipulated time has not yet elapsed following acceptance of the input of the input level, control is transferred to step S57.

In step S57, the sound processing section 71 discriminates whether or not a speech is input on the basis of the speech data from the client 11. In the case where it is discriminated that a speech is not input, control is returned to step S56.

Thereafter, the processing of steps S56 and S57 is repeated until it is discriminated in step S56 that the stipulated time has elapsed following acceptance of the input of the input level or until it is discriminated in step S57 that a speech is input.

On the other hand, in the case where it is discriminated in step S57 that a speech is input, control is transferred to step S58.

In step S58, the sound processing section 71 extracts feature quantities out of the speech data. For example, the sound processing section 71 extracts the feature quantities such as phonemes, sound volumes, and lengths out of the speech data.

In step S59, the sound processing section 71 discriminates whether or not the input speech is a speech for setting an input level (input level setting speech). For example, in the case where the feature quantities such as phonemes, sound volumes and lengths of the speech data fail to meet a predetermined input condition, e.g., where the speech represented by the speech data does not have the features of the input level setting speech explained above in connection with the processing of step S6, the sound processing section 71 discriminates that the speech is not for setting the input level. Control is then returned to step S56.

Thereafter, the processing ranging from step S56 to step S59 is repeated until it is discriminated in step S56 that the stipulated time has elapsed following acceptance of the input of the input level or until it is discriminated in step S59 that the input speech is the input level setting speech.

On the other hand, in the case where the feature quantities of the speech data meet the predetermined input condition in step S59, the sound processing section 71 discriminates that the input speech is the input level setting speech. Control is then transferred to step S60.

In step S60, as in the processing of step S56, it is discriminated whether or not the stipulated time has elapsed following acceptance of the input of the input level. In the case where it is discriminated that the stipulated time has not yet elapsed following acceptance of the input of the input level, control is transferred to step S61.

In step S61, as in the processing of step S54, it is discriminated whether or not speech input is stopped. In the case where it is discriminated that speech input is not stopped, control is returned to step S60.

Thereafter, the processing of steps S60 and S61 is repeated until it is discriminated in step S60 that the stipulated time has elapsed following acceptance of the input of the input level or until it is discriminated in step S61 that speech input is stopped.

On the other hand, in the case where it is discriminated in step S60 that the stipulated time has elapsed following acceptance of the input of the input level or where it is discriminated in step S61 that speech input is stopped, control is transferred to step S62.

Also, in the case where it is discriminated in step S56 that the stipulated time has elapsed following acceptance of the input of the input level, control is transferred to step S62. This is the case where the stipulated time has elapsed without the input level setting speech being input.

In step S62, the feedback information generation section 77 orders termination of acceptance of the input of the input level. Specifically, the feedback information generation section 77 generates an input level input termination instruction that acts as a command to order termination of acceptance of the input of the input level. The feedback information generation section 77 transmits the input level input termination instruction to the client 11 via the communication section 61.

In step S63, the feedback information generation section 77 sets the input level. For example, the feedback information generation section 77 sets the input level based on the feature quantities of the speech data indicative of the input level setting speech.

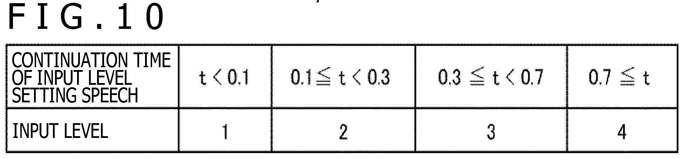

For example, the feedback information generation section 77 sets the input level higher, the longer the continuation time of the input level setting speech, and sets the input level lower, the shorter the continuation time of the input level setting speech. As depicted in FIG. 10, for example, the input level is set to 1 where the continuation time t of the input level setting speech is shorter than 0.1 second. The input level is set to 2 where the continuation time t is 0.1 second or longer and shorter than 0.3 second. The input level is set to 3 where the continuation time t is 0.3 second or longer and shorter than 0.7 second. The input level is set to 4 where the continuation time t is 0.7 second or longer.

Alternatively, the feedback information generation section 77 sets the input level higher, the larger the number of times a predetermined phoneme in the input level setting speech is repeated, and sets the input level lower, the smaller the number of times the predetermined phoneme in the input level setting speech is repeated.

As another alternative, the feedback information generation section 77 sets the input level higher, the larger the sound volume of the input level setting speech, and sets the input level lower, the smaller the sound volume of the input level setting speech.

In the case where the input level setting speech is not input, the feedback information generation section 77 sets the input level to 0.

In step S64, the feedback information generation section 77 generates and transmits feedback information. For example, the feedback information generation section 77 generates feedback information that includes the input information obtained as the result of speech recognition, the result of natural language processing performed on the input information, and the input level having been set. In the case where the input information and the result of natural language processing have already been transmitted, these pieces of information may not necessarily be included in the feedback information at this point. The feedback information generation section 77 transmits the feedback information to the client 11 via the communication section 61.

Thereafter, control is returned to step S51, and the steps subsequent thereto are executed.

On the other hand, in the case where it is discriminated in step S53 that the feedback information is to be transmitted successively, control is transferred to step S65.

In step S65, the feedback information generation section 77 starts generating and transmitting the feedback information. For example, the feedback information generation section 77 starts the process of generating the feedback information that includes the input information obtained as the result of speech recognition and the result of natural language processing performed on the input information, and of transmitting the generated feedback information to the client 11 via the communication section 61.

In step S66, as in the processing of step S54, it is discriminated whether or not speech input is stopped. The discrimination processing of step S66 is repeated in a suitably timed manner. In the case where it discriminated that speech input is stopped, control is transferred to step S67.

In step S67, as in the processing of step S55, acceptance of the input of an input level is ordered.

In step S68, as in the processing of step S56, it is discriminated whether or not the stipulated time has elapsed following acceptance of the input of the input level. In the case where it is discriminated that the stipulated time has not yet elapsed following acceptance of the input of the input level, control is transferred to step S69.

In step S69, as in the processing of step S57, it is discriminated whether or not a speech is input. In the case where it is discriminated that a speech has not yet been input, control is returned to step S68.

Thereafter, the processing of steps S68 and S69 is repeated until it is discriminated in step S68 that the stipulated time has elapsed following acceptance of the input of the input level or until it is discriminated in step S69 that a speech is input.

On the other hand, in the case where it is discriminated in step S69 that a speech is input, control is transferred to step S70.

In step S70, as in the processing of step S58, feature quantities are extracted out of the speech data.

In step S71, as in the processing of step S59, it is discriminated whether or not the input speech is a speech for setting the input level. In the case where it is discriminated that the input speech is not a speech for setting the input level, control is returned to step S68.

Thereafter, the processing ranging from step S68 to step S71 is repeated until it is discriminated in step S68 that the stipulated time has elapsed following acceptance of the input of the input level or until it is discriminated in step S71 that the input speech is a speech for setting the input level.

On the other hand, in the case where it is discriminated in step S71 that the input speech is a speech for setting the input level, control is transferred to step S72.

In step S72, the feedback information generation section 77 starts setting and transmitting the input level. For example, the feedback information generation section 77 starts setting the input level using the similar method as that in the processing of step S63. Also, the feedback information generation section 77 starts the process of generating the feedback information that includes the input information obtained as the result of speech recognition, the result of natural language processing performed on the input information, and the input level having been set, and of transmitting the generated feedback information to the client 11 via the communication section 61. In the case where the input information and the result of natural language processing have already been transmitted, these pieces of information may not necessarily be included in the feedback information at this point.

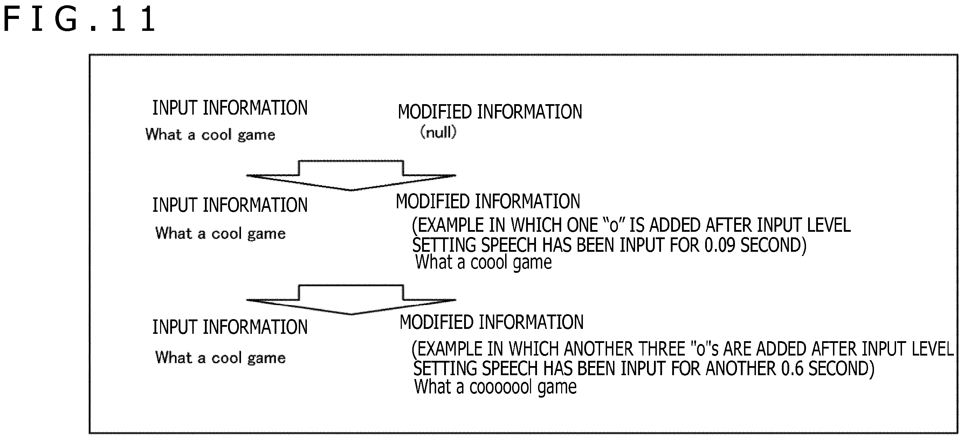

In that case, the server 12 transmits input levels successively to the client 11. Thus, as explained above with reference to FIG. 10, for example, where the input level is set in accordance with the continuation time of the input level setting speech, the input level value transmitted to the client 11 varies depending on the continuation time of the input level setting speech. As a result, the input information (speech recognition result) can be gradually modified in keeping with the input level before being presented, as depicted in FIG. 11, for example.

Specifically, in the case where the input information is "What a cool game," the modified information to be presented is supplemented with a single "o" to become "What a coool game" at a stage where the input level setting speech is input for 0.09 second. At the time when the input level setting speech is continued for another 0.6 second, the modified information to be presented is supplemented with another three "o"s to become "What a cooooool game."

In step S73, as in the processing of step S56, it is discriminated whether or not the stipulated time has elapsed following acceptance of the input of the input level. In the case where it is discriminated that the stipulated time has not yet elapsed following acceptance of the input of the input level, control is transferred to step S74.

In step S74, as in the processing of step S54, it is discriminated whether or not speech input is stopped. In the case where it is discriminated that speech input is not stopped, control is returned to step S73.

Thereafter, the processing of steps S73 and S74 is repeated until it is discriminated in step S73 that the stipulated time has elapsed following acceptance of the input of the input level or until it is discriminated in step S74 that speech input is stopped.

On the other hand, in the case where it is discriminated in step S73 that the stipulated time has elapsed following acceptance of the input of the input level or where it is discriminated in step S74 that speech input is stopped, control is transferred to step S76.

Also, in the case where it is discriminated in step S68 that the stipulated time has elapsed following acceptance of the input of the input level, control is transferred to step S75. This is the case where the stipulated time has elapsed without the input level setting speech being input.

In step S75, the feedback information generation section 77 sets the input level to 0 and transmits the set input level. Specifically, the feedback information generation section 77 sets the input level to 0. Then in the similar processing to that of step S72, the feedback information generation section 77 generates the feedback information that includes the input level and transmits the generated feedback information to the client 11 via the communication section 61.

Thereafter, control is transferred to step S76.

In step S76, as in the processing of step S62, termination of acceptance of the input of the input level is ordered.

In step S77, the feedback information generation section 77 terminates generation and transmission of the feedback information.

Thereafter, control is returned to step S51, and the steps subsequent thereto are executed.

In the manner described above, casual expressions which are frequently used on SNS (Social Networking Services), chat, and games, for example and which are not found in dictionaries can be input easily and appropriately. This improves the convenience in inputting information.

For example, with speech recognition processing, it is difficult to accurately recognize the first and the last characters of a word that is prolonged longer than normal, such as "coooooooooool" in "What a coooooooooool game" (e.g., "c" and "l" are difficult to be recognized) due to speech characteristics. Thus, the probability of erroneous recognition is high.

By contrast, the information processing system 10 first acquires a standard sentence "What a cool game" through speech recognition, before getting the input level setting speech input so as to modify repeatedly the recognized sentence using the characters or symbols. This eliminates erroneous recognition such as that mentioned above.

Further, the user can modify the input sentence easily by simply inputting the input level setting speech without recourse to manually performing operations to modify the sentence "What a cool game."

As a result, the user can input easily and appropriately sentences in which the same character is repeated such as "Chou-Sugeeeeeeee" (Japanese word), "Gorrruaaahhh" (Japanese word), "coooooooooool," "yeeeeeeeeeees," and "smaaaaashhhhhhhhhhhh"; or sentences in which the same symbol is repeated such as "yes!!!!!!!!!!!!!!!!!!!!!!!!"

### 1-4. Other application examples

Explained above have been some examples in which the present technology is applied to the case of modifying the sentences input by speech. This technology may also be applied to other uses.

For example, the present technology may be applied to the processing of interactions with an interactive agent.

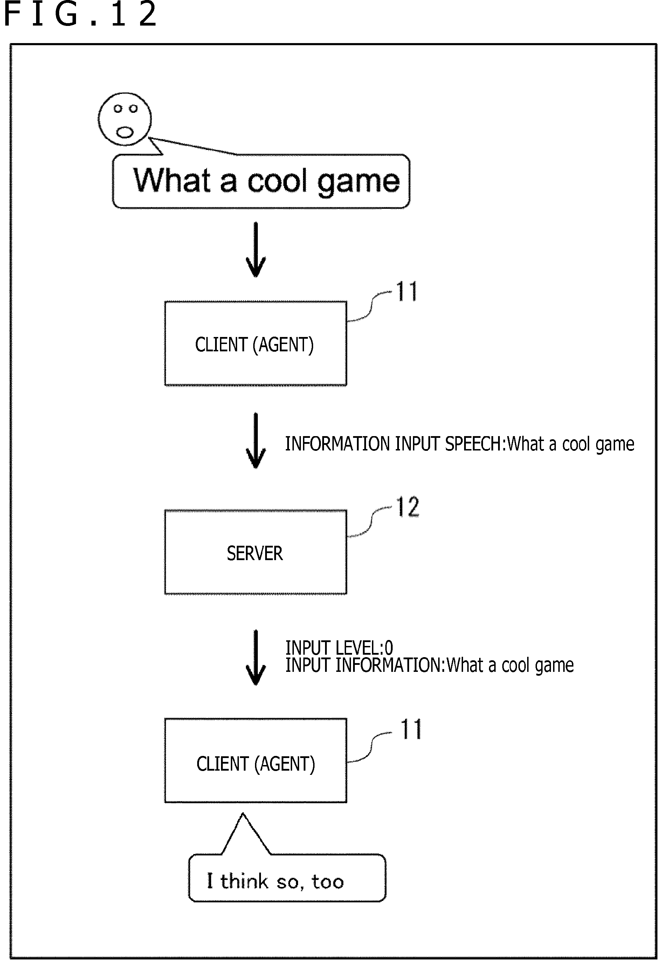

For example, as depicted in FIG. 12, where only the information input speech "What a cool game" is input to the client 11 (i.e., to the agent executed thereby), the server 12 recognizes the input information "What a cool game." Also, the server 12 sets the input level to 0 because an input level setting speech is not input to the client 11. The server 12 then transmits to the client 11 feedback information that includes the input information indicative of the recognized sentence "What a cool game" and the input level being set to 0. Given the sentence "What a cool game" indicated by the input information, the client 11 outputs a response "I think so, too" by speech.

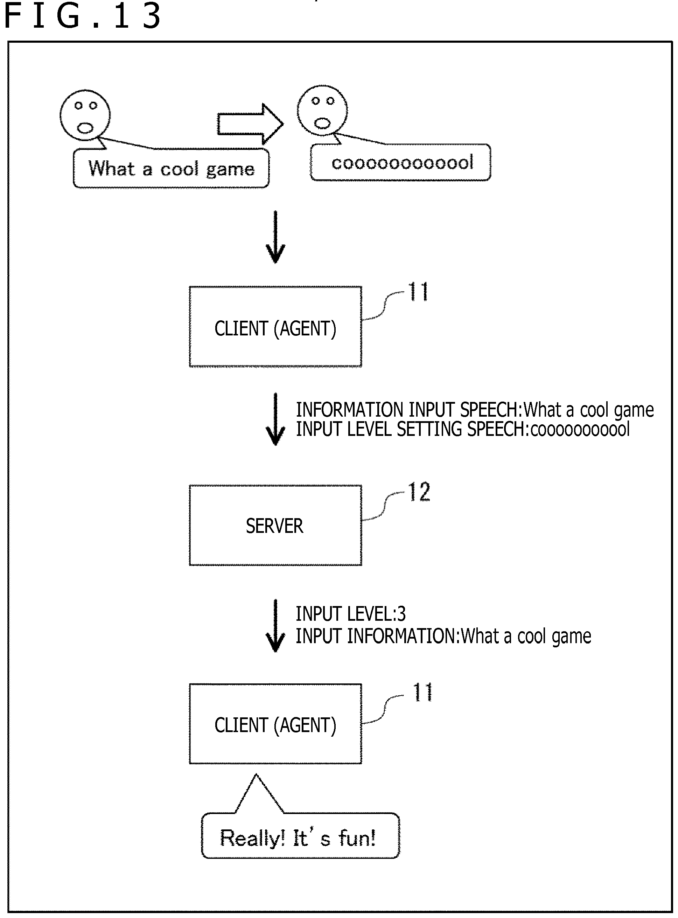

Meanwhile, in the case where the information input speech "What a cool game" is input to the client 11 followed by input thereto of the input level setting speech "cooooooooool" as depicted in FIG. 13, for example, the server 12 recognizes the input information "What a cool game" and concurrently sets the input level to 3 based on the input level setting speech. The server 12 then transmits to the client 11 feedback information that includes the input information indicative of the recognized sentence "What a cool game" and the input level being set to 3. Given the sentence "What a cool game" indicated by the input information, the client 11 outputs by speech a response "Really! It's fun!" giving a greater reaction than if the input level is 0.

For example, in the case where the user inputs a speech "What a coooooooool game," it might conceivably happen that the agent fails in speech recognition for the reasons discussed above and is unable to return an appropriate response. By contrast, the use of the present technology allows the user to get emotional speeches recognized easily by the agent and to perform emotion-charged interactions with the agent easily and appropriately.

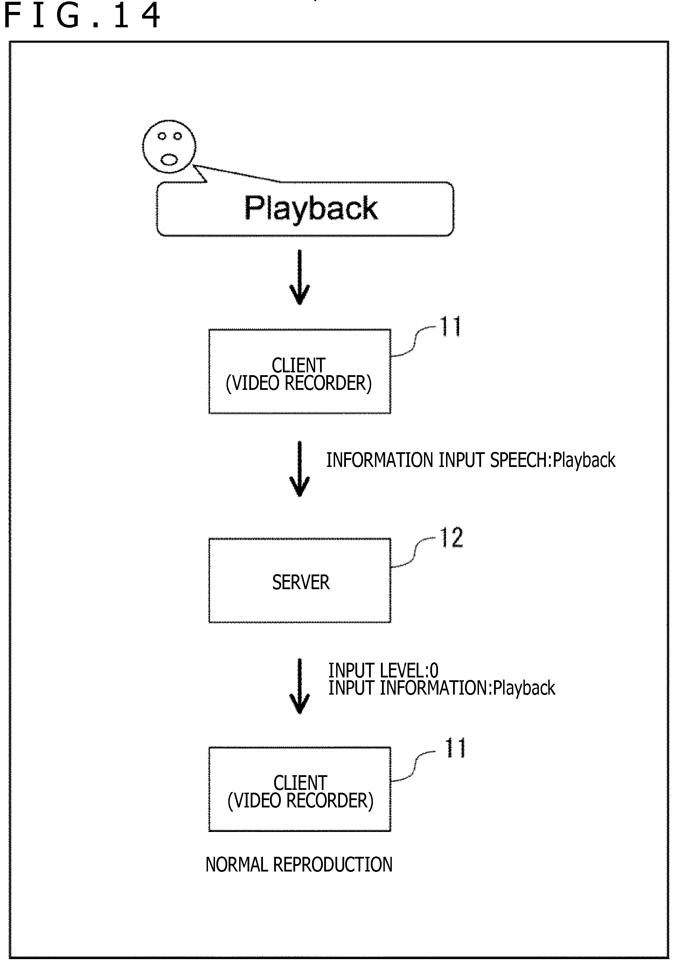

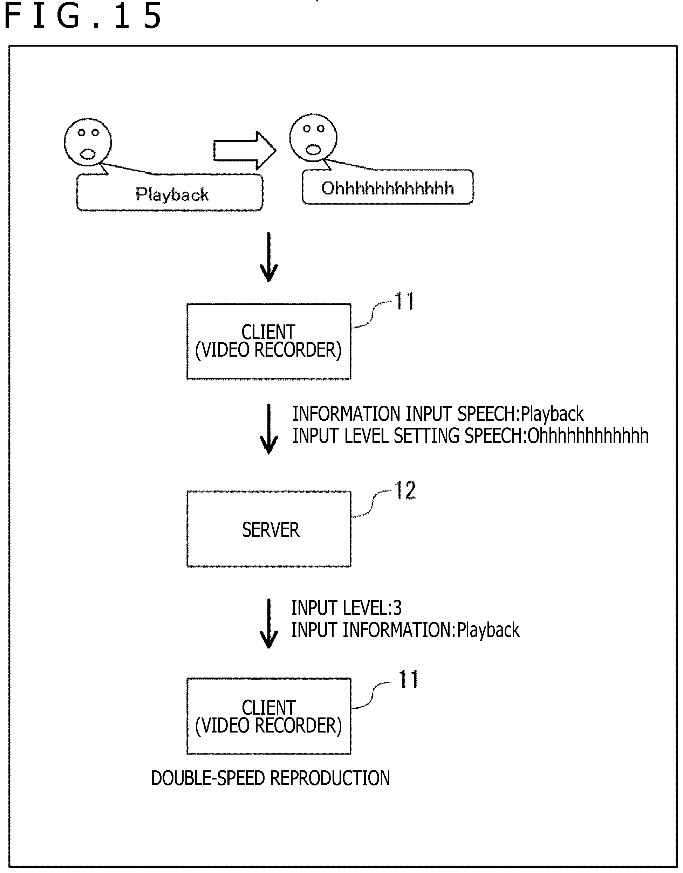

Also, the present technology may be applied to controlling diverse equipment and APPs by use of voice commands. An example in which the client 11 executes an APP for implementing a video recorder is explained below with reference to FIGS. 14 and 15.

In the case where a voice command "Playback" alone is input to the client 11 as depicted in FIG. 14, for example, the server 12 recognizes the command "Playback." Also, the server 12 sets the input level to 0 because the input level setting speech is not input to the client 11. The server 12 then transmits to the client 11 feedback information that includes the input information indicative of the recognized command "Playback" and the input level being set to 0. In accordance with the command "Playback" indicated by the input information, the client 11 performs normal reproduction on the video recorder.

On the other hand, in the case where the voice command "Playback" is input to the client 11 followed by input thereto of the input level setting speech, "Ohhhhhhhhhhhh" as depicted in FIG. 15, the server 12 recognizes the command "Playback" and concurrently sets the input level to 3 based on the input level setting speech. The server 12 then transmits to the client 11 feedback information that includes the input information indicative of the recognized command "Playback" and the input level being set to 3. The client 11 performs double-speed reproduction on the video recorder in accordance with the command "Playback" indicated by the input information and with the input level value 3.

In the manner described above, the user can control the client 11 (APP) to act differently by designating the input level using the input level setting speech with respect to the same voice command. For example, the user can get similar processes executed on different levels (e.g., at different speeds or with different sound volumes) using the similar voice command.

### 2. Variations

Variations of the above-descried embodiment of the present technology are explained below.

### 2-1. Alternative examples to the method of setting the input level

The input level may be set using voice commands such as "Level 1," "Level 2," "Repeat symbol," and "Repeat vowel," for example.

Alternatively, the input level setting speech may be input by combining a speech and an interface of another modal. For example, in the case where the information input speech is to be input, a speech may be input without any other operation being performed, and where the input level setting speech is to be input, a speech may be input while some other operation is being carried out. In such a case, the client 11 recognizes the speech that is input with no other operation being performed as the information input speech, and recognizes the speech that is input while some other operation is being carried out as the input level setting speech.

As another example, a predetermined operation performed on the operation section 22 may be adopted as the operation for inputting the input level setting speech. For instance, the client 11 may recognize, as the input level setting speech, a speech that is input while the user is pressing a predetermined button of the operation section 22 or a speech that is input while the touch pad is being touched.

As a further example, a gesture made by the user may be adopted as the operation for inputting the input level setting speech. For instance, the client 11 recognizes as the input level setting speech a speech that is input by the user while minutely shaking the head or swinging the head from right to left.

As yet another example, the input level may be set to a negative value. For instance, when the sound volume of the input level setting speech is lower than that of the information input speech, the input level may be set to a negative value reflecting the difference in sound volume therebetween. In the case where the input level is a negative value, the client 11 may modify the input information in a manner lowering the expressive power and quantity of the information. For example, if the input information is "Majikatt" (Japanese word), the input information may have the double consonants "tt" at its end deleted to become "Majika."

As a yet further example, the input level may be set depending on the environment such as the service that uses the information input through speech recognition. For instance, in the case where an upsurge of emotion is detected in a service such as an online chat service or an online community as the SNS used by the user, the input level may be set to reflect the degree of the upsurge of emotion. Then, the user has only to input an ordinary sentence by speech so as to post to the service a sentence automatically modified to provide expressiveness reflecting the upsurge of emotion in the service.

As a still further example, it is possible to change the timing as an input condition for inputting the input level setting speech. In some of the foregoing examples, the input condition involves requiring the input level setting speech to be input within a predetermined time period following input of the information input speech. Alternatively, the input condition may require that after the result of speech recognition of the information input speech is obtained, the input level setting speech is to be input within a predetermined time period.

### 2-2. Alternative examples to the modification of input information

The foregoing description has discussed examples in which the input information is modified by adding a character string thereto. Alternatively, the input information may be modified using other methods.

For example, in the case where the input information is a sentence in English, a word or words in the input information may be converted to provide a casual expression, such as "easy" being shortened to "ez."

As another example, in the case where the input information is a sentence in Japanese, part or all of the Chinese characters in the input information may be converted to Hiragana or Katakana characters.

As a further example, visual features of the input information may be changed. For instance, the font, character size, and/or color of the input information may be changed at the time of its display.

As an even further example, the user may be allowed to manually amend the modified information, with the client 11 logging the input information, its input level, and the ultimately modified information in combination. On the basis of the log, the client 11 may generate the same modified information when given the same combination of the input information and the input level. Alternatively on the basis of the log, the client 11 may present multiple modified information candidates.

As a still further example, in the case where the modified information is not what the user expected, the modified information may be simply undone to restore the original input information. For instance, the modified information may be undone to restore the original input information when the user performs a predetermined operation on the operation section 22 or inputs a voice command such as "Undo." For instance, when presented with the modified information, the user may pronounce a speech such as "That's strange" or "That's not what I expected." The meaning of that speech may then be analyzed and, on the basis of the result of the analysis, the modified information may be undone to restore the original input information.

### 2-3. Alternative examples to the system configuration

The typical configuration of the information processing system in FIG. 1 is only an example. The configuration may be changed as needed.

For example, some of the functions of the client 11 may be incorporated in the server 12. Alternatively, some of the functions of the server 12 may be included in the client 11.

As another example, the server 12 may modify the input information based on the input level setting speech, and transmit to the client 11 the feedback information that includes the modified information obtained as the result of such modification.

As a further example, the client 11 may acquire the input information by performing speech recognition on the information input speech. The server 12 may only set the input level and transmit to the client 11 the feedback information that includes the input level and excludes the input information.

As an even further example, the server 12 may transmit the feedback information to an apparatus different from the client 11. For instance, the server 12 may transmit the feedback information that includes a command obtained through speech recognition and the input level to an apparatus (e.g., video recorder) to be operated by that command. In the case where the feedback information is transmitted to an apparatus different from the client 11, the feedback information may include not the input information obtained through speech recognition but the speech data yet to be recognized by speech recognition.

As a still further example, the server 12 may carry out its processing based on the input information and on the input level.

As a yet further example, the client 11 and the server 12 may be integrated into a single apparatus configured to perform the above-described processes.

Furthermore, the present technology may also be applied to cases where the input information is provided using methods other than speech. For example, this technology may be applied to the case of modifying the input information given as text information.

### 3. Application examples

The series of processes described above may be executed either by hardware or by software. Where the series of processes is to be carried out by software, the programs constituting the software are installed into a suitable computer. Variations of the computer include one with the software installed beforehand in its dedicated hardware, and a general-purpose personal computer or like equipment capable of executing diverse functions based on the programs installed therein.

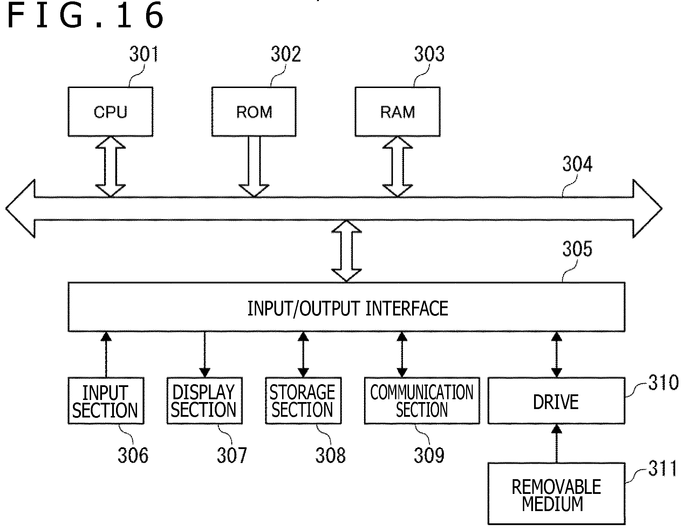

FIG. 16 is a block diagram depicting a typical hardware configuration of a computer that executes the above-described series of processes.

In the computer, a CPU (Central Processing Unit) 301, a ROM (Read Only Memory) 302, and a RAM (Random Access Memory) 303 are interconnected via a bus 304.

The bus 304 is further connected with an input/output interface 305. The input/output interface 305 is connected with an input section 306, an output section 307, a storage section 308, a communication section 309, and a drive 310.

The input section 306 includes a keyboard, a mouse, and a microphone, for example. The output section 307 includes a display unit and speakers, for example. The storage section 308 is typically formed by a hard disk or a nonvolatile memory. The communication section 309 typically includes a network interface. The drive 310 drives removable medium 311 such as a magnetic disk, an optical disk, a magneto-optical disk, or a semiconductor memory.

In the computer configured as described above, the CPU 301 performs the above-mentioned series of processes by loading appropriate programs or from the storage section 308 into the RAM 303 via the input/output interface 305 and the bus 304 and by executing the loaded programs.

The programs to be executed by the computer (CPU 301) may be recorded on the removable medium 311 such as packaged media when offered. The programs may also be offered via wired or wireless transmission media such as local area networks, the Internet, and digital satellite broadcasting.

In the computer, the programs may be installed into the storage section 308 from the removable medium 311 attached to the drive 310 via the input/output interface 305. The programs may also be installed into the storage section 308 after being received by the communication section 309 via wired or wireless transmission media. The programs may alternatively be preinstalled in the ROM 302 or in the storage section 308.

Incidentally, each program to be executed by the computer may be processed chronologically, i.e., in the sequence depicted in this description; in parallel with other programs, or in otherwise appropriately timed fashion such as when it is invoked as needed.

Also, multiple computers may be arranged to perform the above-described processes in a coordinated manner. One or multiple computers performing the above processes include a computer system.

In this description, the term "system" refers to an aggregate of multiple components (e.g., apparatuses or modules (parts)). It does not matter whether or not all components are housed in the same enclosure. Thus a system may be configured with multiple apparatuses housed in separate enclosures and interconnected via a network, or with a single apparatus that houses multiple modules in a single enclosure.

Further, the present technology is not limited to the embodiments discussed above and may be implemented in diverse variations so far as they are within the spirit and scope of this technology.

For example, the present technology may be implemented as a cloud computing setup in which a single function is processed cooperatively by multiple networked devices on a shared basis.

Also, each of the steps discussed in reference to the above-described flowcharts may be executed either by a single apparatus or by multiple apparatuses on a shared basis.

Furthermore, if a single step includes multiple processes, these processes may be executed either by a single apparatus or by multiple apparatuses on a shared basis.

The advantageous effect stated in this description is only an example and is not limitative of the present technology. There may be additional advantageous effects derived from this description.

The present technology when implemented may be preferably configured as follows:
(1) An information processing apparatus including a feedback information generation section configured to generate feedback information including at least either an input level or modified information, the input level indicating a level of input information and being set on a basis of a first speech that meets a predetermined input condition, the modified information being obtained by modifying the input information on the basis of the first speech.
(2) The information processing apparatus as stated in paragraph (1) above, further including a speech recognition section configured to acquire the input information by converting a second speech into a character string.
(3) The information processing apparatus as stated in paragraph (2) above, in which the input condition includes requiring the first speech to be input at a predetermined timing following input of the second speech.
(4) The information processing apparatus as stated in paragraph (2) or (3) above, in which the input condition includes requiring a difference in sound volume between the first speech and the second speech to meet a predetermined condition.
(5) The information processing apparatus as stated in any one of paragraphs (1) to (4) above, in which the input condition includes requiring a feature quantity of the first speech to meet a predetermined condition.
(6) The information processing apparatus as stated in paragraph (5) above, in which the input condition includes requiring a predetermined phoneme in the first speech to be continued for at least a predetermined length.
(7) The information processing apparatus as stated in any one of paragraphs (1) to (6) above, in which the feedback information generation section sets the input level based on a feature quantity of the first speech.
(8) The information processing apparatus as stated in paragraph (7) above, in which the feedback information generation section sets the input level based on a continuation time of the first speech.
(9) The information processing apparatus as stated in paragraph (7) or (8) above, in which the feedback information generation section sets the input level based on a sound volume of the first speech.
(10) The information processing apparatus as stated in any one of paragraphs (1) to (9) above, in which the feedback information generation section generates the modified information by adding a character string to the input information.
(11) The information processing apparatus as stated in paragraph (10) above, in which the feedback information generation section generates the modified information by repeating a predetermined character or a predetermined symbol in the input information.
(12) The information processing apparatus as stated in paragraph (11) above, in which the feedback information generation section generates the modified information by repeating a predetermined character or a predetermined symbol in a word of a predetermined part of speech in the input information.
(13) The information processing apparatus as stated in any one of paragraphs (10) to (12) above, in which the feedback information generation section adjusts a quantity of the character string to be added to the input information on a basis of a feature quantity of the first speech.
(14) The information processing apparatus as stated in any one of paragraphs (1) to (13) above, in which the feedback information includes the input information and the input level.
(15) An information processing method including the step of generating feedback information including at least either an input level or modified information, the input level indicating a level of input information and being set on a basis of a speech that meets a predetermined input condition, the modified information being obtained by modifying the input information on the basis of the speech.
(16) An information processing apparatus including an execution section configured to execute a process relevant to input information on a basis of an input level indicative of a level of the input information, the input level being set on a basis of a first speech that meets a predetermined input condition.
(17) The information processing apparatus as stated in paragraph (16) above, in which the execution section modifies the input information at a level corresponding to the input level.
(18) The information processing apparatus as stated in paragraph (16) above, in which the input information is a command input using a second speech, and
   in which the execution section executes a process relevant to the command at a level corresponding to the input level.
(19) The information processing apparatus as stated in paragraph (16) above, in which the execution section responds to the input information at a level corresponding to the input level.
(20) An information processing method including the step of executing a process relevant to input information on a basis of an input level indicative of a level of the input information, the input level being set on a basis of a speech that meets a predetermined input condition.

### [Reference Signs List]

- 10: Information processing system
- 11: Client
- 12: Server
- 21: Speech input section
- 22: Operation section
- 23: Display section
- 25: Sensor section
- 27: Control section
- 41: Input/output control section
- 42: Presentation control section
- 43: Execution section
- 62: Control section
- 71: Sound processing section
- 72: Image processing section
- 73: Natural language processing section
- 74: Speech recognition section
- 75: Gesture recognition section
- 76: Operation recognition section
- 77: Feedback information generation section

## Claims

1. An information processing apparatus comprising:
a feedback information generation section configured to generate feedback information including at least either an input level or modified information, the input level indicating a level of input information and being set on a basis of a first speech that meets a predetermined input condition, the modified information being obtained by modifying the input information on the basis of the first speech.

2. The information processing apparatus according to claim 1, further comprising:
a speech recognition section configured to acquire the input information by converting a second speech into a character string.

3. The information processing apparatus according to claim 2, wherein
the input condition includes requiring the first speech to be input at a predetermined timing following input of the second speech.

4. The information processing apparatus according to claim 2, wherein
the input condition includes requiring a difference in sound volume between the first speech and the second speech to meet a predetermined condition.

5. The information processing apparatus according to claim 1, wherein
the input condition includes requiring a feature quantity of the first speech to meet a predetermined condition.

6. The information processing apparatus according to claim 5, wherein
the input condition includes requiring a predetermined phoneme in the first speech to be continued for at least a predetermined length.

7. The information processing apparatus according to claim 1, wherein
the feedback information generation section sets the input level based on a feature quantity of the first speech.

8. The information processing apparatus according to claim 7, wherein
the feedback information generation section sets the input level based on a continuation time of the first speech.

9. The information processing apparatus according to claim 7, wherein
the feedback information generation section sets the input level based on a sound volume of the first speech.

10. The information processing apparatus according to claim 1, wherein
the feedback information generation section generates the modified information by adding a character string to the input information.

11. The information processing apparatus according to claim 10, wherein
the feedback information generation section generates the modified information by repeating a predetermined character or a predetermined symbol in the input information.

12. The information processing apparatus according to claim 11, wherein
the feedback information generation section generates the modified information by repeating a predetermined character or a predetermined symbol in a word of a predetermined part of speech in the input information.

13. The information processing apparatus according to claim 10, wherein
the feedback information generation section adjusts a quantity of the character string to be added to the input information on a basis of a feature quantity of the first speech.

14. The information processing apparatus according to claim 1, wherein
the feedback information includes the input information and the input level.

15. An information processing method comprising:
the step of generating feedback information including at least either an input level or modified information, the input level indicating a level of input information and being set on a basis of a speech that meets a predetermined input condition, the modified information being obtained by modifying the input information on the basis of the speech.

16. An information processing apparatus comprising:
an execution section configured to execute a process relevant to input information on a basis of an input level indicative of a level of the input information, the input level being set on a basis of a first speech that meets a predetermined input condition.

17. The information processing apparatus according to claim 16, wherein
the execution section modifies the input information at a level corresponding to the input level.

18. The information processing apparatus according to claim 16, wherein
the input information is a command input using a second speech; and
the execution section executes a process relevant to the command at a level corresponding to the input level.

19. The information processing apparatus according to claim 16, wherein
the execution section responds to the input information at a level corresponding to the input level.

20. An information processing method comprising:
the step of executing a process relevant to input information on a basis of an input level indicative of a level of the input information, the input level being set on a basis of a speech that meets a predetermined input condition.
